# FASCICULE DE BREVET EUROPEEN

(11) **EP 0 622 341 B1**
(45) Date de publication et mention de la délivrance du brevet: **13.11.1996**
(21) Numéro de dépôt: 94400824.2
(22) Date de dépôt: 15.04.1994
(51) Int. Cl.: C03B 37/05, C03B 37/07

(54) **Procédé et dispositif pour la détermination de la position d'un jet de matière en fusion**
Verfahren und Vorrichtung zum Feststellen der Position eines Strahls aus geschmolzenem Material
Process and apparatus for determining the position of a jet of molten material

(30) Priorité: 29.04.1993 FR 9305057
(43) Date de publication de la demande: 02.11.1994
(73) Titulaire: ISOVER SAINT-GOBAIN, F-92400 Courbevoie (FR)
(72) Inventeur: Melinand, Alain, F-60270 Gouvieux (FR); Alliel, Luc, F-60130 St Just en Chaussee (FR)
(74) Mandataire: Menes, Catherine

(56) Documents cités:
- EP-A- 0 059 152
- EP-A- 0 479 676
- DD-B- 292 439

## Description

L'invention concerne les techniques de fabrication de fibres minérales dans lesquelles un jet d'un matériau fondu tombe sur la périphérie d'un rotor à axe sensiblement horizontal qui distribue le matériau fondu à d'autres rotors, les rotors formant des fibres par centrifugation. Elle concerne en particulier la formation de laines minérales à base de compositions verrières ou à base de laitiers de haut fourneaux ou de basalte, selon les techniques décrites en particulier dans les demandes de brevet EP-A-O 167 508 ou EP-A-0 059 152.

Dans ces techniques, il est important de maîtriser la position du point d'impact du jet de matériau fondu sur le premier rotor et cela, non seulement dans la direction tangentielle des rotors, là où la position est responsable de tous les impacts successifs sur les rotors suivants, mais également dans la direction axiale. En effet, deux phénomènes dépendent de cette dernière position. En régime stationnaire, la température des rotors dans la direction axiale n'est pas homogène, le matériau fondu chauffe fortement la zone de l'impact tandis que les zones voisines restent plus froides, il s'ensuit qu'un déplacement incontrôlé de la zone concernée refroidirait - sur chaque rotor - la matière fondue et modifierait sensiblement et instantanément les conditions de fibrage : il est essentiel que de tels déplacements soient effectués sous la maîtrise du conducteur de machine. Mais par ailleurs, un déplacement périodique de la zone où séjourne la matière fondue présente un intérêt certain puisque cela permet de répartir l'usure de la surface du rotor sur toute sa longueur dans la direction de l'axe. Dans ces conditions, il est essentiel de connaître avec précision la position du matériau fondu dans l'espace. C'est une condition nécessaire à la maîtrise de cette position.

Des techniques de mesure optique sur un jet de matière en fusion qui tombe sur une machine de fibrage sont connues. Certaines concernent la détermination et la stabilisation de la position d'un jet de matière en fusion destiné à produire des fibres par un soufflage direct du matériau fondu. La méthode proposée nécessite qu'il soit possible de viser le jet en bout, ce qui est possible dans le procédé en question puisque le jet est dévié brutalement et disparaît même, à l'instant précis où un brûleur dont l'axe lui est perpendiculaire vient fabriquer les fibres.

Dans d'autres techniques, sur une machine de fibrage, le jet de matière en fusion est visé par une caméra CCD dans le but de connaître la largeur du filet vertical tandis que des détecteurs de rayonnement servent à mesurer sa vitesse. Ces deux mesures sont faites dans le but de calculer le débit de matière.

L'homme du métier connaît également l'utilisation de caméras CCD pour déterminer la position d'objets et même grâce à des systèmes mécaniques, électriques et informatiques pour maîtriser leur position ou leur déplacement relatifs. Ces systèmes de visée optoélectronique ont en effet été développés spécialement dans ce but.

L'invention se donne pour tâche de fournir une méthode de détermination de la position relative d'un jet de matériau fondu par rapport à la machine de fibrage qui soit précise et fiable et indépendante des perturbations de la production.

La méthode et les dispositifs de mesure de l'invention doivent permettre également de maîtriser la position relative du jet de matériau fondu par rapport à la machine de fibrage pour, soit la garder constante, soit la modifier de manière contrôlée.

Le document DD-B-292 439 propose de stabiliser la position relative d'un jet de matériau fondu à base de silicates tombant librement et d'une machine de fibrage constituée essentiellement d'une buse de soufflage qui agit horizontalement, c'est-à-dire perpendiculairement à la direction d'origine du jet. Il s' ensuit qu'en aval de la buse, tout le matériau a été entraîné horizontalement et qu'il est alors possible d'effectuer une visée optique de bas en haut, en bout du jet. Le document décrit donc un système dans lequel l'image du jet de matériau fondu obtenue sur un détecteur lié à la machine de fibrage grâce au système de visée est maintenue fixe par rapport au détecteur par l'action de moyens mécaniques qui déplacent la machine de fibrage.

Le système de DD-B-292 439 comprenant la détection de la position du jet de matériau fondu et les moyens d'en stabiliser la position relative par rapport à la machine de fibrage est très spécifique de la technique de fibrage concernée. Il n'est pas du tout extrapolable à une machine où le matériau fondu tombe successivement sur plusieurs cylindres en rotation dont les axes sensiblement horizontaux sont parallèles entre eux.

La méthode optique d'évaluation d'un filet de matériau fondu lors de sa chute sur une machine de fibrage qui est essentiellement destinée à en mesurer le débit est décrite par exemple dans la demande de brevet européen EP-A-479 676. Une caméra linéaire dite CCD (Charged Coupled Device) à direction de mesure horizontale vise le filet de matière en fusion et deux détecteurs de rayonnement sont placés l'un au-dessus de l'autre, à une distance l'un de l'autre qui est connue avec précision. Les mesures effectuées sont d'une part la largeur du filet et d'autre part le temps qui sépare le passage d'une particularité caractéristique, successivement devant chacun des deux détecteurs. Cette dernière mesure fournit la vitesse et la première donne une indication sur la section, ces deux éléments combinés fournissent à leur tour une estimation du débit de matière dans le filet qui tombe.

L'invention quant à elle propose un procédé d'obtention de fibres minérales à partir d'un matériau thermoplastique à haut point de fusion consistant dans la fusion dudit matériau et sa distribution à l'état fondu sous forme d'un jet, sur un rotor d'une machine de fibrage qui peut en comporter plusieurs, dans lequel la position du jet par rapport aux rotors est déterminée d'une part directement dans une direction sensiblement perpendiculaire au plan vertical du jet et d'autre part dans une direction horizontale sensiblement parallèle au plan vertical du jet, soit par une détermination de la position d'impact du jet sur le premier rotor à partir d'une mesure optique effectuée sur le jet lui-même, soit directement, par la mesure de la position dudit matériau à l'état fondu à la périphérie d'un des rotors. De préférence, la position du jet dans une direction sensiblement perpendiculaire au plan vertical du jet est déterminée par visée optique sur le jet lui-même. D'autre part, la détermination de la position du point d'impact du jet sur le premier rotor à partir d'une mesure optique sur le jet lui-même dans une direction horizontale sensiblement parallèle au plan vertical du jet se fait par le calcul à partir d'une part du résultat de la mesure optique et d'autre part, de la position connue du point d'émission du jet.

Lorsque la machine de fibrage utilisée dans le procédé de l'invention comporte plusieurs rotors et que la mesure de la position du matériau à l'état fondu est effectuée, elle l'est de préférence sur le premier ou le second rotor de fibrage, alors c'est avantageusement par visée optique, les visées optiques étant effectuées par des caméras CCD.

Selon l'invention, le résultat de la détermination est utilisé pour commander la position du point d'impact du jet sur le premier rotor et le résultat de la détermination de la position relative du jet dans une direction est utilisé pour commander le déplacement relatif du jet et de la machine de fibrage sensiblement dans la même direction, par ailleurs, la visée optique sur la périphérie du rotor sert à y déterminer la largeur du matériau fondu.

L'invention concerne également un dispositif pour l'obtention de fibres minérales à partir d'un matériau thermoplastique fondu et comportant un four de fusion, des organes de distribution d'un jet du matériau en fusion et des rotors destinés à distribuer le matériau fondu et/ou à centrifuger des fibres qui comporte de plus, notamment, un organe de visée optique balayant sensiblement une génératrice de l'un des rotors et également un organe de visée optique balayant une portion de droite sensiblement perpendiculaire, à la fois au jet de matériau fondu et à la génératrice du rotor balayée par le premier organe de visée optique.

Les organes de visée optiques font partie de caméras CCD et, ou bien, les organes de distribution du jet du matériau en fusion sont équipés de moyens de déplacement, ou bien, c'est la machine de fibrage qui en est équipée, dans les deux cas, ces moyens agissent dans des directions sensiblement parallèles aux directions de balayage des organes de visée optiques. De plus, un système électrique et/ou électronique commande les moyens de déplacement en fonction des indications fournies par les organes de visée optique.

Les figures et la description permettront de comprendre l'invention.
- la figure 1 montre une installation de fibrage avec une première variante des systèmes de l'invention,
- la figure 2 montre une autre variante,
- la figure 3 représente la caméra protégée dans son dispositif de montage,
- la figure 4 présente un schéma du dispositif de l'invention avec déplacement de la machine de fibrage,
et la figure 5, comme la figure 6, des enregistrements de mesures de position du jet sans (figure 5) ou avec (figure 6) régulation de la position.

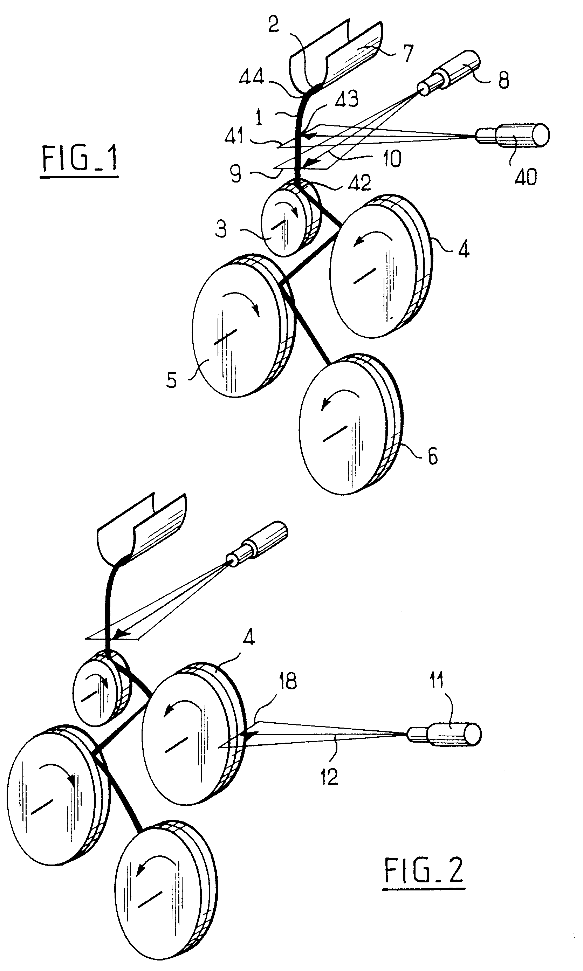

Dans le dispositif représenté schématiquement sur la figure 1, on coule un jet 1 d'une masse minérale fondue 2 telle que de la roche ou du laitier sur la surface extérieure d'une série de disques 3, 4, 5, 6 en acier tournant à une vitesse de l'ordre de 2000-10000 t/mn autour d'axes sensiblement perpendiculaires à la direction du jet.

Chaque disque 3, 4, 5, 6 a un diamètre de l'ordre de 10 à 50 cm et une épaisseur de l'ordre de 5 à 15 cm.

La température du jet 1 de masse fondue est comprise entre 1000 et 1900°C. Cette masse fondue est coulée sur les rotors 3, 4, 5, 6 à raison d'environ 0,5 à 10 tonnes par heure. Le premier disque 3 est en général plus petit que les autres et sert essentiellement à transformer le jet dense de masse liquide en un jet secondaire accéléré.

Dans les zones voisines de celles du matériau fondu, la température de la surface extérieure des rotors est maintenue à moins 800°C grâce à une circulation d'eau non représentée.

Le jet de matière fondue arrivant sur un rotor se divise en deux, une partie restant collée au rotor et l'autre partie étant éjectée. Sur les rotors 4, 5, 6, la matière fondue collée est divisée en gouttelettes qui sous l'effet de la force centrifuge sont étirées sous forme de fibres.

Sur la figure 1, la masse minérale fondue 2 est transportée par une goulotte 7 qui est alimentée par l'orifice de sortie d'un fondoir, par exemple un cubilot, non représenté. Dans une des variantes de l'invention, la goulotte 7 est avantageusement équipée de moyens de déplacement dans une direction parallèle à l'axe des rotors et dans une autre direction, perpendiculaire à la première, en général horizontale comme elle. Ces moyens de déplacement, par exemple des vérins électriques ne sont pas représentés sur la figure 1. A la place de la goulotte 7 on utilise parfois un récipient stockeur intermédiaire appelé stabilisateur tel que celui décrit dans la demande de brevet européen EP-A-495 723 ; la fonction de ce type de récipient est essentiellement la régulation de la température et du débit de la matière fondue 2 alimentant le jet 1. Si l'on utilise un stabilisateur, lui aussi dans la même variante est, comme la goulotte 7, avantageusement équipé de moyens de déplacement destinés à mettre en oeuvre la version de l'invention où l'on désire non seulement connaître la position du jet de matière fondue 1 mais également maîtriser cette position par rapport à une machine de fibrage fixe.

Sur la figure, on a représenté une première caméra 8 qui balaye un champ rectiligne 9 qui permet de suivre dans le cas de la figure 1, où le jet est dans le même plan vertical que la caméra 8, le déplacement du filet de matière fondue 1 dans la direction horizontale perpendiculaire à ce plan.

Sur la figure, l'axe de visée 10 de la caméra est représenté parallèle à l'axe des rotors. Il est en effet intéressant que les directions de mesure et les directions de déplacement de la machine soient les mêmes. Cependant, pour des raisons d'implantation de la caméra 8 dans un environnement très encombré autour de la machine de fibrage, la direction de l'axe 10 de la caméra 8 peut s'écarter légèrement de cette position : même si l'axe 10 n'est pas perpendiculaire à la direction de mesure 9, la détermination précise de la position du jet 1 dans la direction 9 se déduit facilement des mesures fournies par la caméra 8.

Sur la figure 1 toujours, on a représenté une seconde caméra 40 qui vise le jet 1 dans une direction horizontale 41 comprise sensiblement dans le plan vertical du jet 1.

Il peut arriver, exceptionnellement que dans certaines installations le jet 1 soit en permanence parfaitement vertical. Dans ce cas le seul principe à respecter est d'avoir les directions de mesure 9 et 41, de préférence horizontales et sensiblement perpendiculaires l'une à l'autre. Mais en général à l'origine du jet, sa vitesse a une composante horizontale soit parce qu'on utilise une goulotte 7 comme sur la figure, soit parce que, dans le cas d'un stabilisateur, il est prévu qu'il se déplace en rotation dans un plan vertical ce qui fait tourner l'axe de l'orifice de sortie du jet 1 également dans un plan vertical, dans lequel se trouve donc le jet.

Dans ce cas la caméra 8 et son axe 10 seront situés sensiblement dans ce même plan tandis que c'est la direction de mesure 41 de la caméra 40 qui se trouve dans ledit plan.

Ce qui importe au conducteur de machine, c'est de connaître et si possible de maîtriser le point d'impact 42 du jet 1 sur le premier rotor 3. Avec la caméra 8, la connaissance de la position du jet 1 sur la zone de mesure 9 suffit pour connaître la position du point 42 dans la direction tangentielle. Mais dans l'autre direction, parallèle à l'axe des rotors - à moins d'effectuer la mesure au niveau du point 42 lui-même ce qui est difficile - il convient d'effectuer une correction pour déduire de la position du point 43 sur la trace 41 et du point 44 de départ du jet qui est connu, la position 42 cherchée. La détermination des corrections à apporter est à la portée de l'homme du métier soit de manière empirique, en faisant varier la composante horizontale de la vitesse au point 44, par exemple par une variation de débit, soit par le calcul en faisant des hypothèses sur la forme de la trajectoire, parabolique en première approximation.

Pour déterminer la position du jet 1 dans une direction parallèle à l'axe des rotors, l'invention prévoit dans sa deuxième variante que la seconde caméra 11 représentée figure 2 soit installée de manière à pouvoir viser la périphérie de l'un des rotors - sur la figure 2, le rotor 4. Dans ce but la caméra 11 avec son axe de visée 12 se trouve dans un plan perpendiculaire au plan du jet et qui est sur la figure, voisin du plan de symétrie du rotor concerné, de manière à ne pas se trouver sur la trajectoire des particules infibrées éjectées par le rotor.

Le fait de ne pas viser le jet directement présente un avantage important, en effet, il évite d'avoir à introduire des corrections dans les mesures.

La visée optique à l'aide d'une caméra, comme la caméra 11 n'est qu'un moyen parmi d'autres de réaliser la seconde variante de l'invention. Des détecteurs de rayonnement comme ceux du document EP-A-479 676 permettent d'obtenir le même résultat en particulier s'il s'agit d'avoir la matière fondue toujours sur la même zone des rotors.

Il est évident que puisque tout déplacement axial du jet 1 entraîne un déplacement identique des jets successifs qui atteignent les rotors 3, 4, 5 et 6, il est indifférent de viser l'un ou l'autre de ceux-ci.

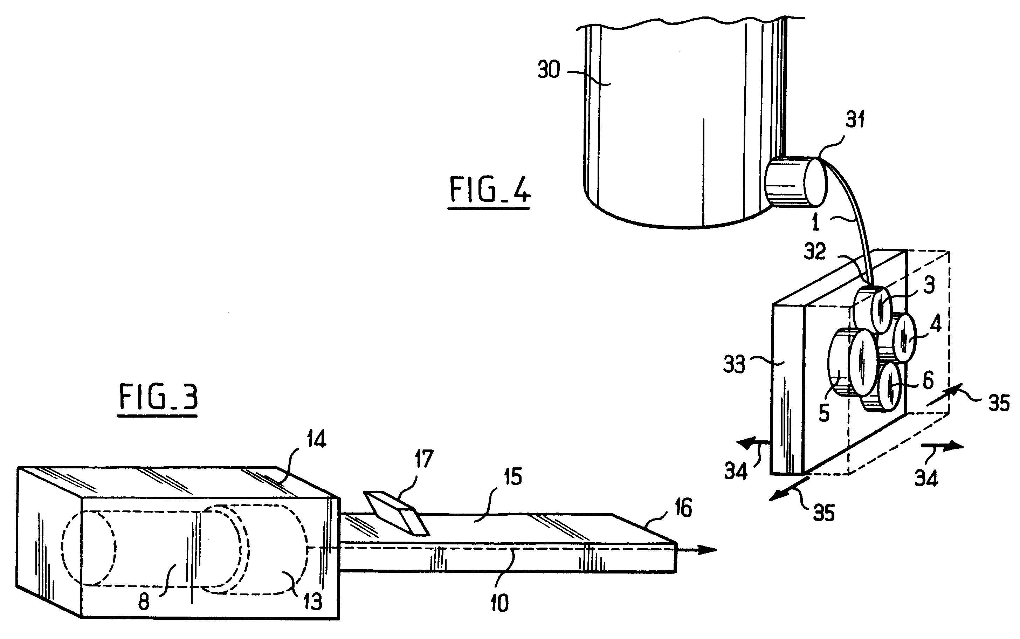

Sur la figure 3, on a représenté le carter qui protège chacune des caméras. On voit la caméra 8 avec son objectif 13 et son axe de visée 10. Le carter 14 comporte un boîtier 15 dont l'extrémité 16 est ouverte. Dans la partie supérieure du boîtier 15 un orifice 17 permet d'introduire de l'air de soufflage. Celui-ci établit un courant qui s'oppose à l'introduction de fibres, poussières, fumées, etc.. et protège ainsi l'objectif de la caméra 8.

Cette caméra comme la caméra 9 est du type Charged Coupled Device (CCD). Lors des essais, on a utilisé des caméras de la Société Contrôle Vision Industrie équipées de barrettes Thomson avec 1728 pixels. Le signal de sortie de chaque caméra est transmis à un microprocesseur qui déduit du signal qu'il reçoit :
. la présence ou l'absence du jet 1
. la position du jet 1 par rapport à un système de référence fixe et orienté selon les directions de mesure 9 pour la caméra 8 ou 41 pour la caméra 40 et 18 selon la caméra 11.

C'est l'analyse - habituelle pour l'homme du métier - du signal fourni par chacune des caméras 8 d'une part et 40 ou 11 de l'autre qui permet de déterminer la position du matériau fondu.

La figure 4 présente une deuxième variante du système de régulation de la position du jet 1 par rapport aux rouleaux de la machine. Ici le jet 1 qui est issu directement de l'orifice 31 d'un cubilot 30 équipé d'un système de régulation de débit, est fixe. La maîtrise du point d'impact 32 du jet 1 sur le rotor 3 ne peut se faire qu'en déplaçant toute la machine de fibrage 33 par exemple grâce à un système à crémaillère.

Ce déplacement s'effectue avantageusement dans deux directions horizontales orthogonales, parallèle à l'axe des rotors pour la première 34 et perpendiculaire à cet axe pour la seconde 35.

Dans le cas de la figure 4, les caméras 8 et 11 sont avantageusement liées mécaniquement à la machine de fibrage 33.

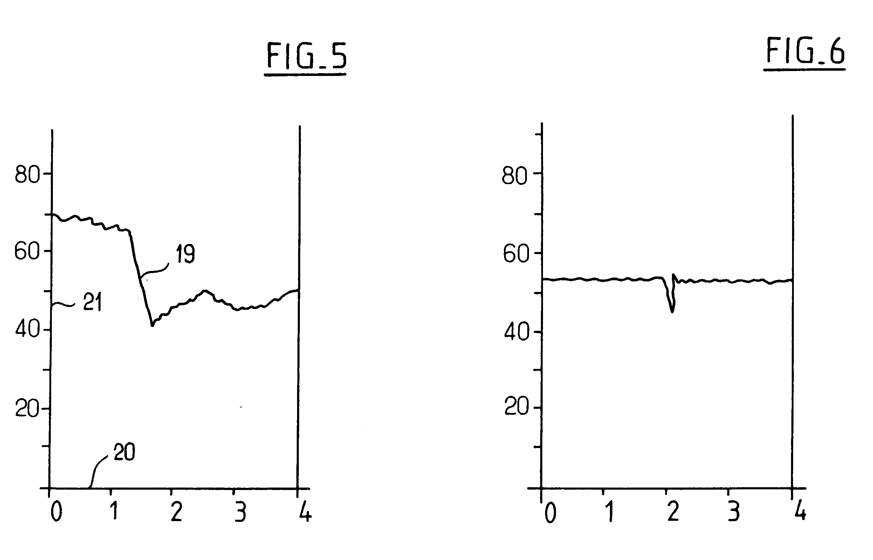

Sur la figure 5, on voit le tracé 19 qui est l'enregistrement dans le temps de la position du jet 1 enregistrée par la caméra axiale 11 sans régulation de cette position . L'axe des abscisses 20 indique les temps en quarts d'heures et l'axe des ordonnées, en 21, la position de la trace du matériau fondu exprimée en millimètres. On voit que sur une durée d'une heure, le jet 1 s'est déplacé d'une vingtaine de millimètres. En dehors d'une brusque descente à mi-parcours, il s'agit essentiellement d'une dérive lente.

De telles variations de la position axiale du jet de matière fondue sur le premier rotor - et par conséquent, de la position de la matière en fusion sur tous les rotors ont des conséquences néfastes sur le fibrage. Quand la matière fondue aborde sur un rotor, une zone plus froide, elle adhère moins au rotor et le fibrage s'effectue moins facilement, la proportion de matière éjectée vers le rotor suivant est plus importante et il s'ensuit une déstabilisation générale du fonctionnement de la machine.

Le dispositif de l'invention dans ses deux variantes permet non seulement de suivre le déplacement du jet de matière fondue en particulier dans la direction de l'axe des rotors mais l'information recueillie permet de corriger rapidement ce déplacement en agissant sur des moyens appropriés par exemple au niveau de la goulotte 7 du stabilisateur. Ainsi, dans le cas de la goulotte 7 de la figure 1 ou de la figure 2, des vérins électriques non représentés permettent d'effectuer un déplacement dans deux directions orthogonales, d'une part dans la direction de l'axe de la goulotte, c'est-à-dire sensiblement dans les directions de balayage 41 et 18 des caméras 40 ou 11 et d'autre part, parallèlement à la direction de balayage 9 de la caméra 8. Les indications recueillies au bout de chacune des chaînes de mesures commençant respectivement à la caméra 8 et aux caméras 40 ou 11 permettent d'agir immédiatement sur chacun des deux vérins électriques et par conséquent de retrouver le même point de consigne c'est-à-dire globalement le même point d'impact du jet 1 sur le rotor 3.

Le système de la figure 4 où le mouvement relatif jet 1 - machine de fibrage 33 est obtenu seulement par le déplacement de cette dernière aboutit évidemment au même résultat.

La figure 6 montre en comparaison avec la figure 5 comment le procédé de l'invention permet de stabiliser le jet 1. Ici la régulation fonctionne, c'est-à-dire que dès qu'une variation de position est détectée, les vérins électriques correspondants sont actionnés pour compenser le déplacement. On utilise pour obtenir le résultat de la figure 6 les procédés de régulation proportionnelle bien connus de l'homme du métier. Le résultat est comme on le voit, une stabilité de l'ordre de quelques millimètres à l'exception de la perturbation visible au milieu de la courbe et qui correspond à une « coulure » importante le long du jet, qui a provoqué sa déviation.

Mais il est également possible de déplacer de manière contrôlée l'endroit où la matière en fusion atteint le premier rotor. Il est possible par exemple pendant toute la durée de vie des rotors 3, 4, 5 et 6, de déplacer progressivement ce point d'impact le long d'une génératrice de manière à provoquer une usure régulière de toute la surface utile des rotors pendant toute la durée d'une campagne entre deux changements de rotors. Pour cela, il suffit qu'au cours d'une campagne, entre deux changements de rotors, le point d'impact du jet sur le premier rotor soit déplacé selon une génératrice, le long de la largeur utile du rotor.

Le procédé de l'invention permet également d'utiliser les indications de la caméra 11 dans un autre but. En déterminant la largeur de plage éclairée c'est-à-dire la largeur de la zone recouverte de matière en fusion, on a des informations utiles sur le déroulement du procédé, en particulier sur le risque de voir la matière fondue s'échapper du rotor, de même lorsque l'endroit où se dépose la matière est maîtrisé, la largeur de la zone renseigne sur la température et/ou la viscosité et sur le «collage » de la matière sur le rotor et donc sur les caractéristiques du fibrage.

Par rapport aux techniques antérieures, le procédé de l'invention permet d'obtenir des résultats plus fiables. Et les résultats sont par conséquent utilisables pour maîtriser le procédé de fibrage alors que sans cette fiabilité la régulation ne serait pas possible.

La mesure directe du jet, même dans le cas où des corrections sont apportées, présente également un autre inconvénient. Le jet 1 n'est pas toujours cylindrique, des irrégularités peuvent se présenter, en particulier «des coulures », des gouttes s'échappent du bord de la goulotte 7 ou de l'orifice 31 et glissent le long du jet 1. Quand on mesure directement le jet 1, ces irrégularités perturbent la mesure. Si la caméra 11 visait directement le jet 1, il serait impossible d'y échapper. Au niveau de la zone de mesure 18 de la caméra 11 visant le rotor 4, en revanche les irrégularités qui pouvaient exister sur le jet 1 se trouvent "lissées", et en particulier les "coulures" ne perturbent pas du tout la mesure.

On voit ainsi que la méthode de l'invention présente une solution élégante au problème posé.

## Revendications

1. Procédé d'obtention de fibres minérales à partir d'un matériau thermoplastique à haut point de fusion consistant dans la fusion dudit matériau et sa distribution à l'état fondu sous forme d'un jet (1), sur un rotor (3) d'une machine de fibrage qui peut en comporter plusieurs, **caractérisé en ce que** la position du jet (1) par rapport aux rotors est déterminée, d'une part directement dans une première direction (9) horizontale et d'autre part, dans une seconde direction horizontale (41, 18) sensiblement perpendiculaire à la première, soit par une détermination de la position d'impact du jet (1) sur le premier rotor (3) à partir d'une mesure optique effectuée sur le jet (1) lui-même, soit, directement, par la mesure de la position dudit matériau à l'état fondu à la périphérie d'un des rotors.

2. Procédé selon la revendication 1, **caractérisé en ce que** le jet (1) n'est pas rectiligne, qu'il est situé dans un plan vertical, **en ce que** la première direction horizontale (9) est sensiblement perpendiculaire audit plan vertical **et en ce que** la position du jet (1) dans ladite première direction (9) est déterminée par visée optique sur le jet (1) lui-même.

3. Procédé selon la revendication 2, **caractérisé en ce que** la détermination de la position du point d'impact (42) du jet sur le premier rotor (3) à partir d'une mesure optique sur le jet (1) lui-même dans une seconde direction horizontale (41) se fait par le calcul à partir d'une part du résultat de la mesure optique et d'autre part, de la position connue du point (44) d'émission du jet.

4. Procédé selon l'une des revendications 1 à 3, **caractérisé en ce que** la machine de fibrage comporte plusieurs rotors **et en en ce que** la mesure de position du matériau à l'état fondu se fait sur le premier ou le second rotor de fibrage.

5. Procédé selon la revendication 4, **caractérisé en ce que** la mesure de la position du matériau à la périphérie des rotors se fait par visée optique.

6. Procédé selon l'une des revendications 2 à 4, **caractérisé en ce que** les visées optiques sont effectuées par des caméras CCD.

7. Procédé selon l'une des revendications précédentes, **caractérisé en ce que** le résultat des déterminations des positions relatives du jet est utilisé pour commander la position du point d'impact du jet sur le premier rotor.

8. Procédé selon la revendication 7, **caractérisé en ce que** le résultat de la détermination de la position relative du jet dans une direction est utilisé pour commander le déplacement relatif du jet et de la machine de fibrage, sensiblement dans la même direction.

9. Procédé selon l'une des revendications 4 à 8, **caractérisé en ce que** la visée optique sur la périphérie du rotor sert à y déterminer la largeur du matériau fondu.

10. Procédé selon l'une des revendications 7 à 9, **caractérisé en ce que**, au cours d'une campagne, entre deux changements de rotors, le point d'impact du jet sur le premier rotor est déplacé selon une génératrice, le long de la largeur utile du rotor.

11. Dispositif pour l'obtention de fibres minérales à partir d'un matériau thermoplastique fondu et comportant un four de fusion, des organes de distribution d'un jet du matériau fondu et des rotors destinés à distribuer le matériau fondu et/ou à centrifuger des Libres, **caractérisé en ce qu**'il comporte notamment un organe de visée optique balayant sensiblement une génératrice de l'un des rotors.

12. Dispositif selon la revendication 11, **caractérisé en ce que** il comporte également un organe de visée optique balayant une portion de droite sensiblement perpendiculaire, à la fois au jet de matériau fondu et à la génératrice du rotor balayée par le premier organe de visée optique.

13. Dispositif selon la revendication 11 ou 12, **caractérisé en ce que** les organes de visée optiques font partie de caméras CCD.

14. Dispositif selon la revendication 12 ou 13, **caractérisé en ce que** les organes de distribution du jet du matériau fond sont équipés de moyens de déplacement dans des directions sensiblement parallèles aux directions de balayage des organes de visée optique.

15. Dispositif selon la revendication 12 ou 13, **caractérisé en ce que** les rotors destinés à distribuer le matériau fondu et/ou à centrifuger des fibres appartiennent à une machine de fibrage équipée de moyens de déplacement dans des directions sensiblement parallèles aux directions de balayage des organes de visée optique.

16. Dispositif selon la revendication 14 ou 15, **caractérisé en ce qu**'un système électrique et/ou électronique commande les moyens de déplacement en fonction des indications fournies par les organes de visée optique.

## Claims

1. Process for obtaining mineral fibres from a thermoplastic material with a high melting point, consisting in melting said material and the distribution thereof in the molten state in the form of a stream (1) on a rotor (3) of a fibre-drawing machine which may comprise several thereof, characterised in that the position of the stream (1) in relation to the rotors is determined on the one hand directly in a first horizontal direction (9), and on the other hand in a second horizontal direction (41, 18), either by determining the position of impact of the stream (1) on the first rotor (3) from an optical measurement performed on the stream (1) itself, or, directly, by the measurement of the position of the said material in the molten state at the periphery of one of the rotors.

2. Process according to Claim 1, characterised in that the stream (1) is not rectilinear, that it is located in a vertical plane, in that the first horizontal direction (9) is approximately perpendicular to the vertical plane and in that the position of the jet (1) in said first direction (9) is determined by optical sighting of the stream (1) itself.

3. Process according to Claim 2, characterised in that the determination of the position of the point of impact (42) of the stream on the first rotor (3) from an optical measurement on the stream (1) itself in a second horizontal direction (41) is performed by a calculation of, on the one hand, the result of the optical measurement, and, on the other hand, the known position of the starting point (44) of the stream.

4. Process according to any one of Claims 1 to 3, characterised in that the fibre-drawing machine comprises several rotors, and in that the measurement of the position of the material in the molten state is performed on the first or the second fibre-drawing rotor.

5. Process according to Claim 4, characterised in that the measurement of the position of the material at the periphery of the rotors is performed by optical sighting.

6. Process according to one of Claims 2 to 4, characterised in that the optical sightings are performed by CCD cameras.

7. Process according to any one of the preceding claims, characterised in that the result of the determinations of the relative positions of the stream is used to control the position of the point of impact of the stream on the first rotor.

8. Process according to Claim 7, characterised in that the result of the determination of the relative position of the stream in one direction is used to control the relative displacement of the stream and of the fibre-drawing machine, substantially in the same direction.

9. Process according to any one of Claims 4 to 8, characterised in that the optical sighting on the periphery of the rotor is used to determine the width of the molten material there.

10. Process according to any one of Claims 7 to 9, characterised in that, in the course of a manufacturing period between two changes of rotors, the point of impact of the stream on the first rotor is displaced along a generatrix, on the active width of the rotor.

11. Device for obtaining mineral fibres from a molten thermoplastic material and comprising a melting furnace, members for the distribution of a stream of molten material, and rotors intended to distribute the molten material and/or to centrifuge fibres, characterised in that it comprises, in particular, an optical sighting member, substantially scanning a generatrix of one of the rotors.

12. Device according to Claim 11, characterised in that it also comprises an optical sighting member scanning a portion of a straight line, substantially perpendicular, at the same time to the stream of molten material and to the generatrix of the rotor scanned by the first optical sighting member.

13. Device according to Claim 11 or 12, characterised in that the optical observing members form part of CCD cameras.

14. Device according to Claim 12 or Claim 13, characterised in that the members for distributing the stream of molten material are provided with displacement means in directions that are substantially parallel to the scanning directions of the optical sighting members.

15. Device according to Claim 12 or 13, characterised in that the rotors intended to distribute the molten material and/or to centrifuge fibres are part of a fibre-drawing machine provided with means for displacement in directions that are approximately parallel to the scanning directions of the optical sighting members.

16. Device according to Claim 14 or Claim 15, characterised in that an electric and/or electronic system controls the displacement means as a function of the indications provided by the optical sighting members.

## Patentansprüche

1. Verfahren zur Herstellung von Mineralfasern ausgehend von einem thermoplastischen Material mit hohem Schmelzpunkt, welches im Erschmelzen des Materials und seiner Zuführung im erschmolzenen Zustand in Form eines Strahls (1) auf einen Rotor (3) von gegebenenfalls mehreren Rotoren einer Zerfaserungseinheit besteht, **dadurch gekennzeichnet, daß** die Position des Strahls (1) in Bezug auf die Rotoren zum einen direkt in einer ersten horizontalen Richtung (9) und zum anderen in einer zweiten, zur ersten Richtung im wesentlichen senkrechten horizontalen Richtung (41, 18) bestimmt wird, und zwar entweder durch eine Bestimmung der Auftreffposition des Strahls (1) auf dem ersten Rotor (3) ausgehend von einer an dem Strahl (1) selbst vorgenommenen optischen Messung, oder unmittelbar durch die Messung der Position des im erschmolzenen Zustand befindlichen Materials am Umfang eines der Rotoren.

2. Verfahren nach Anspruch 1, **dadurch gekennzeichnet, daß** der Strahl (1) nicht geradlinig ist, daß er in einer vertikalen Ebene enthalten ist, daß die erste horizontale Richtung (9) im wesentlichen senkrecht zur vertikalen Ebene verläuft, sowie dadurch, daß die Position des Strahls (1) in der ersten Richtung (9) durch optisches Anvisieren am Strahl (1) selbst bestimmt wird.

3. Verfahren nach Anspruch 2, **dadurch gekennzeichnet, daß** die Bestimmung der Position der Auftreffstelle (42) des Strahls auf dem ersten Rotor (3) ausgehend von einer optischen Messung am Strahl (1) selbst in einer zweiten horizontalen Richtung (41) durch eine Berechnung ausgehend von dem Ergebnis der optischen Messung einerseits und von der bekannten Position der Ausgabestelle (44) des Strahls andererseits durchgeführt wird.

4. Verfahren nach einem der Ansprüche 1 bis 3, **dadurch gekennzeichnet, daß** die Zerfaserungseinheit mehrere Rotoren aufweist und daß die Messung der Position des im erschmolzenen Zustand befindlichen Materials am ersten oder am zweiten Rotor vorgenommen wird.

5. Verfahren nach Anspruch 4, **dadurch gekennzeichnet, daß** die Messung der Position des Materials am Umfang der Rotoren durch optisches Anvisieren durchgeführt wird.

6. Verfahren nach einem der Ansprüche 2 bis 4, **dadurch gekennzeichnet, daß** die optischen Anvisieren durch CCD-Kameras durchgeführt werden.

7. Verfahren nach einem der vorhergehenden Ansprüche, **dadurch gekennzeichnet, daß** das Ergebnis der Bestimmung der relativen Positionen des Strahls verwendet wird, um die Position der Auftreffstelle des Strahls auf dem ersten Rotor zu steuern.

8. Verfahren nach Anspruch 7, **dadurch gekennzeichnet, daß** das Ergebnis der Bestimmung der relativen Position des Strahls in einer Richtung verwendet wird, um die relative Verschiebung des Strahls und der Zerfaserungseinheit im wesentlichen in der gleichen Richtung zu steuern.

9. Verfahren nach einem der Ansprüche 4 bis 8, **dadurch gekennzeichnet, daß** das optische Anvisieren am Umfang des Rotors zur Bestimmung der Breite des Schmelzematerials dient.

10. Verfahren nach einem der Ansprüche 7 bis 9, **dadurch gekennzeichnet, daß** die Auftreffstelle des Strahls auf dem ersten Rotor im Verlauf eines Verwendungszeitraums zwischen zwei Austauschvorgängen zum Austauschen von Rotoren entlang einer Mantellinie über die Nutzbreite des Rotors verschoben wird.

11. Vorrichtung zur Herstellung von Mineralfasern ausgehend von einem thermoplastischen Material, welche einen Schmelzofen, Organe zum Zuführen eines Strahls aus Schmelzematerial und Rotoren zum Aufteilen des Schmelzematerials und/oder Abschleudern der Fasern aufweist, **dadurch gekennzeichnet, daß** die Vorrichtung insbesondere ein Organ zum optischen Anvisieren aufweist, welches im wesentlichen eine Mantellinie eines der Rotoren abtastet.

12. Vorrichtung nach Anspruch 11, **dadurch gekennzeichnet, daß** sie im wesentlichen ein Organ für das optische Anvisieren aufweist, welches einen Abschnitt einer Geraden abtastet, die sowohl zu dem Strahl aus Schmelzematerial als auch zu der Mantellinie des von dem ersten Organ für die optische Beobachtung abgetasteten Rotors im wesentlichen senkrecht ist.

13. Vorrichtung nach Anspruch 11 oder 12, **dadurch gekennzeichnet, daß** die Organe für das optische Anvisieren einen Bestandteil von CCD-Kameras darstellen.

14. Vorrichtung nach Anspruch 12 oder 13, **dadurch gekennzeichnet, daß** die Organe zum Zuführen des Strahls aus Schmelzematerial mit Einrichtungen zum Verschieben in Richtungen ausgerüstet sind, die im wesentlichen parallel zu den Abtastrichtungen der Organe für das optische Anvisieren sind.

15. Vorrichtung nach Anspruch 12 oder 13, **dadurch gekennzeichnet, daß** die Rotoren, welche dazu bestimmt sind, das Schmelzematerial aufzuteilen und/oder Fasern abzuschleudern, Teil einer Zerfaserungseinheit bilden, welche mit Einrichtungen zum Verschieben in Richtungen ausgerüstet ist, die im wesentlichen parallel zu den Abtastrichtungen der Organe für das optische Anvisieren sind.

16. Vorrichtung nach Anspruch 14 oder 15, **dadurch gekennzeichnet, daß** ein elektrisches und/oder elektronisches System die Verschiebungseinrichtungen in Abhängigkeit von den durch die Organe für das optische Anvisieren zur Verfügung gestellten Informationen steuert.
